# EUROPÄISCHE PATENTSCHRIFT

(11) **EP 0 927 592 B1**
(45) Veröffentlichungstag und Bekanntmachung des Hinweises auf die Patenterteilung: **24.05.2000**
(21) Anmeldenummer: 97810910.6
(22) Anmeldetag: 26.11.1997
(51) Int. Cl.: B23H 1/04, B23H 9/14

(54) **Hartmetall-Elektroerosionselektrode**
Hard metal alloy electroerosion electrode
Electrode pour électroérosion en métal dur

(43) Veröffentlichungstag der Anmeldung: 07.07.1999
(73) Patentinhaber: Balzer Technik SA, 1564 Domdidier (CH)
(72) Erfinder: Balzer, Hartmut, 1564 Domdidier (CH)
(74) Vertreter: AMMANN PATENTANWAELTE AG BERN

(56) Entgegenhaltungen:
- EP-A- 0 416 541
- EP-A- 0 634 243
- CH-A- 538 887
- FR-A- 2 097 709
- PATENT ABSTRACTS OF JAPAN vol. 011, no. 318 (M-632), 16.Oktober 1987 & JP 62 102919 A (MITSUBISHI ELECTRIC CORP), 13.Mai 1987,

## Beschreibung

Die vorliegende Erfindung bezieht sich auf Hartmetall-Elektroerosionselektroden gemäss Oberbegriff des Anspruchs 1.

Elektroerosionselektroden bestehen bekannterweise aus "weichen" Metallen, oft Kupfer und Messing. Hartmetall-Elektroerosionselektroden bieten dagegen längere Standzeiten, sind aber auch schwieriger in der nötigen Präzision herstellbar.

Hartmetall-Elektroerosionselektroden werden durch Strangpressen aus dem Ausgangsmaterial, oft im wesentlichen Wolframkarbid mit Kobalt- oder Nickelzusatz als Bindemittel, durch Strangpressen geformt. Der so erhaltene Grünkörper wird gesintert, wobei eine Schrumpfung um 20 % bis 25 % eintritt. Eine übliche Härte von Hartmetall-Elektroerosionselektroden ist ca. 2000 Vickers. Herkömmliche Hartmetall-Elektroerosionselektroden, sowie ein Verfahren zu ihrer Herstellung, sind z.B. aus der Schrift EP-A-0 416 541 bekannt.

Für Erosionsverfahren, bei denen der Arbeitsvorgang eine Bewegung der Elektrode in ihrer Längsrichtung bedingt, z. B. Senkerodieren oder Startlochbohren für die Drahtelektroerosion, weisen die Elektroden einen Kanal auf, durch die Spülflüssigkeit zur Erosionszone an der Stirnseite der Elektrode herangeführt werden kann. Dieser Kanal ist als eine zentral in Längsrichtung der Elektrode verlaufende Bohrung mit kreisförmigem Querschnitt ausgeführt.

Nachteilig an solchen Hartmetall-Elektroerosionselektrode ist, dass trotz der üblichen Drehbewegung um die Längsachse im Bereich der Kanalöffnung eine stark verminderte bis verschwindende Erosion auftritt. In der Folge bleibt im Bereich der Kanalöffnung nicht abgetragenes Material in Form eines Zapfens stehen, der in den Spülmittelkanal hineinwächst. Der Spülmittelfluss wird dadurch zunehmend behindert bis blockiert.

Eine Aufgabe der vorliegenden Erfindung besteht darin, eine Hartmetall-Elektroerosionselektrode anzugeben, bei der der obengenannte Effekt unterdrückt ist oder gar nicht auftritt, und die ohne grosse Probleme hestellbar ist.

Eine derartige Elektrode ist im Anspruch 1 definiert. Die weiteren Ansprüche geben bevorzugte Ausführungsformen an.

Im wesentlichen weist die erfindungsgemässe Elektrode einen Spülflüssigkeitskanal auf, dessen Querschnitt sich deutlich von der Kreisform unterscheidet. Abgesehen von einer Vielzahl verschiedener, denkbarer Querschnitte, von denen als Ausführungsbeispiele einige aufgeführt sind, kann insbesondere der Spülkanal auch einen Drall aufweisen. Mit anderen Worten verlaufen dabei die Irregularitäten, insbesondere die Felder (5), spiralförmig in Längsrichtung des Spülkanals. Als untere Grenze für den Drall kann von einem Winkel von 1° gegenüber der Kanallängsrichtung ausgegangen werden, ein bevorzugter Bereich ist 10° bis 30°. Andere Drallwinkel sind jedoch grundsätzlich nicht ausgeschlossen.

Die Erfindung soll weiter an Ausführungsbeispielen unter Bezugnahme auf Figuren erläutert werden. Massangaben beziehen sich in der ganzen Beschreibung und in den Ansprüchen auf die einsatzfähige, gesinterte und geschliffene Hartmetall-Elektroerosionselektrode. Die Figuren zeigen auch zur besseren Darstellung die Spülflüssigkeitskanäle bzw. die Formcharakteristika derselben übermassstäblich vergrössert.
- Figur 1: zeigt einen Schnitt durch eine herkömmliche Elektrode;
- Figuren 2 bis 11: zeigen Querschnitte von erfindungsgemäss gestalteten Hartmetall-Elektroerosionselektroden; und
- Figur 12: eine mögliche Anordnungen von mehreren Kanälen in einer Hartmetall-Elektroerosionselektrode.

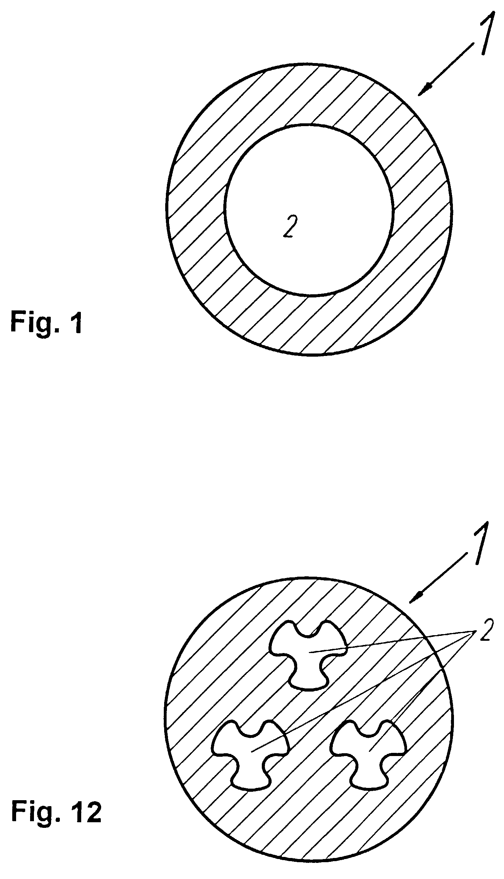

Fig. 1 zeigt eine herkömmliche Hartmetall-Elektroerosionselektrode 1, in der ein zylindrischer Spülkanal 2 mit exakt kreisförmigem Querschnitt verläuft. Der Kanal 2 wird durch einen Dorn erzeugt, der zentral in der Auspressöffnung der Strangpresse angeordnet ist. Gemäss bisherigem Stand der Technik waren andere als kreisförmige Querschnitte des Spülkanals bei Hartmetall-Elektroerosionselektroden aus verschiedenen Gründen nicht machbar:

Ein anderer als kreisförmiger Querschnitt führt in der Regel dazu, dass sich die Elektrode beim Sintern verbiegt oder durch die auftretenden Spannungen zerreisst. Daneben waren derartige Elektrode bereits direkt nach dem Strangpressen verzogen.

Eine weiteres Problem ist der notwendigerweise sehr dünne Dorn: gängig sind Hartmetall-Elektroerosionselektroden mit Aussendurchmessern von bis zu 6 mm, oft jedoch 4 mm oder auch weniger, z. B. 0,1 mm. Der Kanaldurchmesser beträgt dabei 0,04 mm bis 1,5 mm, je nach geforderter Wandstärke. Die entsprechend dünnen Dornen mit einer Dicke entsprechend dem verlangten Kanaldurchmesser sind grundsätzlich einer hohen Verschleissgefahr ausgesetzt, da das Ausgangsmaterial (Wolframkarbid) hoch abrasiv ist und unter hohem Druck am Dorn vorbeigedrückt wird. Für ausreichend hohe Standzeit der Auspressdorne wurde es daher als unabdingbar angesehen, nur Dorne mit kreisrundem Querschnitt einzusetzen, die formbedingt geringsten Verschleiss aufweisen.

Gemäss der Erfindung wurde jedoch gefunden, dass es einerseits durchaus nicht kreisförmige Querschnitte für den Spülkanal gibt, die die Sintereigenschaften der Elektroden nicht beeinträchtigen. Bevorzugte Formen sind dabei diejenigen, bei denen der entsprechende Auspressdorn auch eine überraschend hohe Standzeit aufweist.

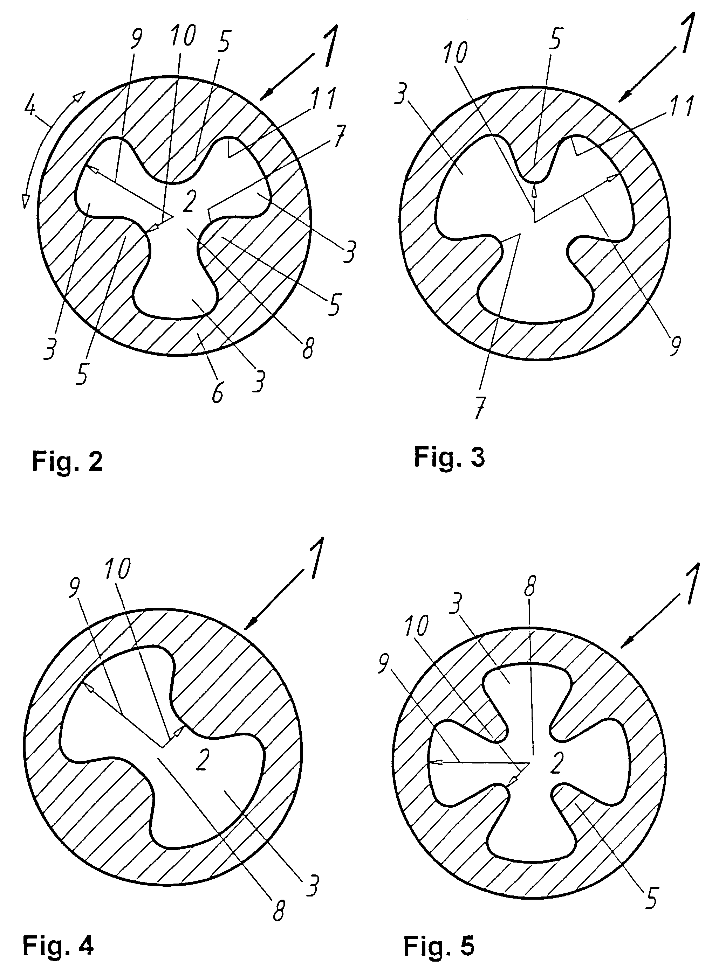

Figuren 2 und 3 zeigen eine Querschnittsform, die sich als besonders günstig erwiesen hat. Grundsätzlich ist, um Verformen und/oder Zerreissen der Elektrode zu vermeiden, eine Querschnittgeometrie zu bevorzugen, die eine Drehsymmetrie aufweist. Drehsymmetrie der Zähligkeit n besagt, dass das drehsymmetrische Objekt bei Drehung um 360°/n um das Symmetriezentrum wieder in sich selbst übergeht. Die kleeblattförmigen Querschnitte der Figuren 2 und 3 zeigen eine 3zählige Drehsymmetrie, bei der einerseits durch radiale Vertiefungen relativ weite, periphere Aussenkanäle 3 ausgebildet werden, die bei der Drehung der Elektrode gemäss Pfeil 4 während des Erosionsvorgangs auch offensichtlich nicht durch Zapfenbildung verstopft werden können. Zum anderen weist der Spülkanal 2, in Analogie zu Gewehrläufen, relativ dicke Felder 5 auf, so dass diese eine Abnutzung aufweisen, die mit derjenigen der Elektrodenwand 6 vergleichbar ist. Die ins Innere des Spülkanals 2 vorstehenden Scheitel 7 der Felder 5 bewirken eine erhöhte, Erosionswirkung im Mittelhohlraum 8, so dass auch ein Hineinwachsen eines Zapfens in der Mittelhohlraum bei gleichzeitigem, optimalem Kühlmittelfluss verhindert wird.

Die Ausführungen der Figuren 2 und 3 unterscheiden sich dabei im wesentlichen durch den Anteil der Aussenkanäle 3 bzw. Felder 5 am Umfang: In Fig. 2 nimmt jeder Aussenkanal 3 ca. 70° ein, jedes Feld 5 ca. 50°, in Fig. 3 90° bzw. 30°.

Die gegenüber der 2zähligen, ansonsten ähnlichen Ausführung der Figur 4 höherzählige, eher der Kreisform angenäherte Form des Kanalquerschnitts der Figuren 2 und 3 führt zu einem sehr guten Verhalten der Elektroden bei der Herstellung, insbesondere dem Sintern, und die dennoch noch relativ grossen Krümmungsradien ergeben auch Auspressdorne mit guten Standzeiten. Auf der anderen Seite erhöhen die gegenüber der 2zähligen Ausführung der Figur 4 kleineren Krümmungsradien der Scheitel 7 bereits deutlich die Erosionswirkung im Mittelhohlraum 8.

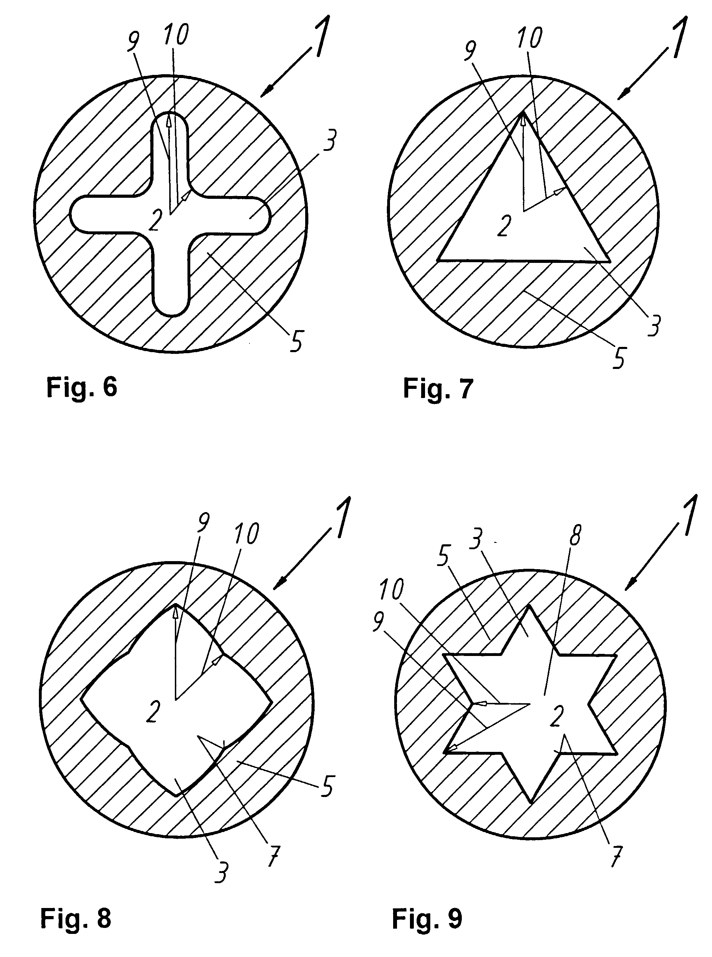

Varianten mit einer höheren, 4zähligen Drehsymmetrie zeigen die Figuren 5 und 6. Bei ersterer nehmen die Aussenkanäle 3 je einen Winkel von ca. 60° und die Felder 5 je einen Winkel von ca. 30° ein. Bei Figur 6 sind die Aussenkanäle in Form von Nuten von nahezu rechteckigem Querschnitt ausgebildet.

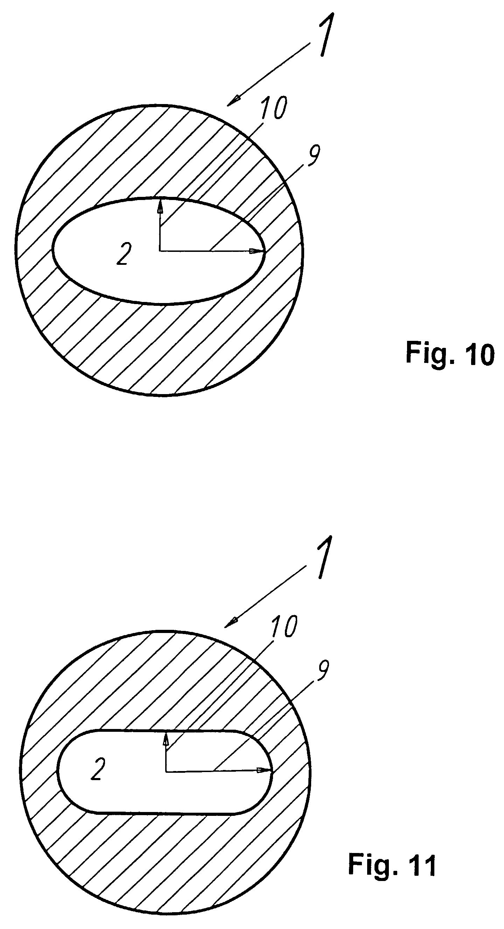

Weitere, denkbare Ausbildungen erfindungsgemässer Elektroden zeigen die Figuren 7 bis 11. Figur 7 zeigt einen dreieckigen Querschnitt, Figur 9 einen sternförmigen mit 6zähliger Drehsymmetrie, wobei die hier wieder vorhandenen, scharfen Scheitel zwar eine Erhöhung des Abtrags im Mittelhohlraum 8 bewirken, jedoch auch stärker beansprucht werden. Figur 8 zeigt einen stark aufgeweiteten Querschnitt mit 4zähliger Symmetrie. Figuren 10 und 11 zeigen schliesslich einen elliptischen bzw. ovalen Querschnitt des Spülkanals 2. Die relativ weiten Querschnitte der Figuren 8, 10 und 11 lassen eine sehr hohe Standzeit des Auspressdorns erwarten, lassen jedoch eine verringerte Unterdrückung der Zapfenbildung erwarten. Sie gewährleisten jedoch immer noch, dass eine Verstopfung des Kanals 2 durch den Zapfen nicht möglich ist. Denkbare Anwendungen könnten z. B. dort sein, wo ein Zapfen im Prinzip nicht stört, und nur ein hinreichender Durchfluss an Spülflüssigkeit auch bei Auftreten eines Zapfens im Mittelhohlraum 8 gewährleistet sein muss.

Zur Charakterisierung eines hinreichend nicht mehr kreisförmigen Querschnitts des Spülmittelkanals kann der Quotient q aus der Differenz Δr zwischen grösstem Innenwandabstand rₘₐₓ 9 und kleinstem Innenwandabstand rₘᵢₙ 10 und rₘₐₓ 9 dienen: die unterste Grenze für eine wirksame Abweichung liegt bei einem Wert q von ca. 0.01. Bevorzugt weist er jedoch Werte im Bereich von 0,1 bis 1; 0,3 bis 0,7 und schliesslich 0,4 bis 0,6 auf. Der Winkelanteil der Aussenkanäle 3 oder allgemeiner der Vertiefungen zwischen den nach innen vorstehenden Feldern 5 sollte, gemittelt über rₘᵢₙ bis rₘₐₓ, im Bereich von 20 % bis 80 %, bevorzugt 50 % bis 75 % und insbesondere bevorzugt 66 % bis 75 % des Vollkreisumfangs (360°) betragen, wobei das Komplement durch die Felder gebildet wird.

Die bei der Ausbildung der Aussenkanäle auftretenden K ümmungen, insbesondere am Scheitel 7 und bei den Übergängen 11 der Flanken der Felder 3 in die Basiskrümmung der Aussenkanäle 3, weisen bevorzugt nahezu gleichen Krümmungsradius auf, z. B. mit einer relativen Abweichung untereinander von weniger als 10 % des grössten vorkommenden Radius.

Denkbar ist auch eine beliebige, im Extremfall irreguläre Form des Querschnitts, bevorzugt jedoch mit einer Drehsymmetrie. Gegebenenfalls sind dann rₘᵢₙ und rₘₐₓ als Abstände vom Schwerpunkt des Querschnitts zu bestimmen, welcher wieder bevorzugt im Zentrum der Elektrode liegt bzw. ungefähr identisch mit dem Schwerpunkt des Elektrodenquerschnitts ist. Bei den bevorzugten, drehsymmetrischen Querschnitten von Elektroden, die in der Praxis derzeit einfach kreisförmig sind, und Kanälen fällt der Querschnittschwerpunkt einfacherweise mit dem Mittelpunkt der Querschnitte zusammen.

Denkbar ist es auch, die Aussenkanäle 3 und Felder 5 spiralförmig über die Länge der Elektrode auszuführen, analog dem Drall bei einem Gewehrlauf. Die spiralförmige Ausbildung kann z. B. durch Drehen des Pressdorns während des Strangpressens erzeugt werden. Ein Vorteil einer solchen Ausführung ist, dass bei Abnutzung der Elektrode virtuell eine Drehung der Elektrode, zumindest bezüglich des Spülkanals, hervorgerufen wird, ohne dass die Elektrode selbst in Drehung versetzt werden muss. Damit wird auch bei stationärer Elektrode einem Wachstum von Zapfen in die Aussenkanäle wirksam begegnet.

Nicht ausgeschlossen ist es auch, insbesondere bei Elektroden grösseren Durchmessers, mehrere parallele Kanäle der erfindungsgemässen Formgebung in der Elektrode vorzusehen. Fig. 12 zeigt das Prinzip einer der vielen denkbaren Anordnungen mehrerer Kanäle 2 in einer Mehrkanalektrode 20. Es können einer bis alle Kanäle erfindungsgemäss gestaltet sein, und zwar nicht unbedingt identisch. Um Verformung oder Zerstörung beim Sintern zu vermeiden, sollte wieder eine drehsymmetrische Anordnung der Gesamtkanalform zur Mittellängsachse der Elektrode vorzuziehen sein.

## Patentansprüche

1. Hartmetall-Elektroerosionselektrode (1), die im wesentlichen die Form eines Stabes mit einem Durchmesser von höchstens 6 mm aufweist, in dem sich in Längsrichtung mindestens ein geschlossener Kanal (2) erstreckt, und die im wesentlichen aus einem hartmetall aus Wolframkarbid und einem Binder besteht, dadurch gekennzeichnet, dass der Kanal einen Querschnitt aufweist, bei dem der Quotient q aus der Differenz Δr zwischen dem grössten Abstand rₘₐₓ (9) und dem kleinsten Abstand rₘᵢₙ (10) jeweils zwischen der Kanalinnenwand und dem Querschnittschwerpunkt des Kanals (2), und dem grössten Abstand rₘₐₓ (9) mindestens 0,01 beträgt und jeder Kanal eine ganzzahlige Drehsymmetrie aufweist, wobei im Fall von mehr als einem Kanal die Anordnung der Kanäle drehsymmetrisch zum Querschnittsschwerpunkt der Elektrode ausgebildet ist.

2. Hartmetall-Elektroerosionselektrode (1) gemäss Anspruch 1, dadurch gekennzeichnet, dass die Hartmetall-Elektroerosionselektrode mindestens einem der folgenden Charakteristika entspricht:
- Aussendurchmesser mindestens 0,1 mm und höchstens 6 mm, bevorzugt höchstens 4 mm;
- drehsymmetrischer, bevorzugt kreisförmiger Querschnitt der Elektrode;
- genau ein Kanal (2), dessen Querschnittschwerpunkt im wesentlichen identisch ist mit demjenigen der Hartmetall-Elektroerosionselektrode (1) ; und
- 2 oder mehr Kanäle (2) in bevorzugt drehsymmetrischer Anordnung um den Querschnittschwerpunkt der Hartmetall-Elektroerosionselektrode.

3. Hartmetall-Elektroerosionselektrode (1) gemäss Anspruch 1 oder 2, dadurch gekennzeichnet, dass der Quotient q mindestens 0,1 ist und bevorzugt im Bereich 0,25 bis 0,7 und weiter bevorzugt im Bereich 0,4 bis 0,6 liegt.

4. Hartmetall-Elektroerosionselektrode (1) gemäss einem der Ansprüche 1 bis 3, dadurch gekennzeichnet, dass mindestens ein Kanal (2) einen grössten Radius rₘₐₓ (9) von höchstens 0,75 mm, bevorzugt höchstens 0,6 mm und insbesondere bevorzugt von 0,17 mm bis 0,2 mm aufweist.

5. Hartmetall-Elektroerosionselektrode (1) gemäss einem der Ansprüche 1 bis 4, dadurch gekennzeichnet, dass die Wand des Kanals (2) im wesentlichen aus einer Anzahl Felder (5) besteht, die voneinander durch Vertiefungen (3) getrennt sind, wobei sich Felder (5) und Vertiefungen im wesentlichen in Längsrichtung des Kanals (2) erstrecken.

6. Hartmetall-Elektroerosionselektrode (1) gemäss Anspruch 5, dadurch gekennzeichnet, dass die Felder (5) und Vertiefungen (3) einen Drall aufweisen, der durch einen Winkel von bevorzugt mindestens 1° und weiter bevorzugt im Bereich von 10° bis 30° gegeben ist.

7. Hartmetall-Elektroerosionselektrode (1) gemäss einem der Ansprüche 5 oder 6, dadurch gekennzeichnet, dass der Winkelanteil der Vertiefungen (3), gemittelt vom minimalen Wandabstand rₘᵢₙ bis zum maximalen Wandabstand rₘₐₓ, 20 % bis 80 %, bevorzugt 50 % bis 75 und insbesondere bevorzugt 66 % bis 75 % % des Vollkreisumfangs beträgt.

8. Hartmetall-Elektroerosionselektrode (1) gemäss einem der Ansprüche 1 bis 7, dadurch gekennzeichnet, dass der Kanalquerschnitt eine 3-, 4- oder 5zählige Drehsymmetrie aufweist.

9. Hartmetall-Elektroerosionselektrode (1) gemäss einem der Ansprüche 1 bis 8, dadurch gekennzeichnet, dass der Binder für das Wolframkarbid im wesentlichen Nickel und/oder Kobalt ist.

10. Verwendung der Hartmetall-Elektroerosionselektrode (1) gemäss einem der Ansprüche 1 bis 8 für Erosionsverfahren mit Arbeitsrichtung in Längs- und Querrichtung der Hartmetall-Elektroerosionselektrode, bevorzugt unter Drehung der Elektrode, insbesondere für das Senkerodieren, insbesondere von Durchgangs- und Sacklöchern, und das Bohren von Startlöchern für Drahtelektroerosion.

## Claims

1. Hard metal electroerosion electrode (1), essentially in the form of a rod having a diameter of 6 mm at the most, in the longitudinal direction of which at least one closed channel (2) extends, and which is essentially composed of a hard metal consisting of tungsten carbide and of a binder, characterised in that the channel has a cross-section where the quotient q of the difference Δr between the greatest distance rₘₐₓ (9) and the smallest distance rₘᵢₙ (10) between the respective inner channel wall and the center of gravity of the cross-section of the channel (2), and of the greatest distance rₘₐₓ (9) amounts to at least 0.01, and each channel having an integral rotational symmetry, the disposition of the channels being rotationally symmetrical with respect to the center of gravity of the cross-section of the electrode in the case of a plurality of channels.

2. Hard metal electroerosion electrode (1) according to claim 1, characterised in that the hard metal electroerosion electrode corresponds to at least one of the following characteristics:
- minimum external diameter of 0.1 mm and maximum external diameter of 6 mm, preferably at most 4 mm;
- rotationally symmetrical, preferably circular cross-section of the electrode;
- exactly one channel (2) with the center of gravity of its cross-section essentially identical to that of the hard metal electroerosion electrode (1); and
- two or more channels (2), preferably in a rotationally symmetrical disposition around the center of gravity of the cross-section of the hard metal electroerosion electrode.

3. Hard metal electroerosion electrode (1) according to claim 1 or 2, characterised in that the quotient q is at least 0.1 and preferably comprised in the range between 0.25 and 0.7, more preferably in the range between 0.4 and 0.6.

4. Hard metal electroerosion electrode (1) according to one of claims 1 to 3, characterised in that at least one channel (2) has a greatest radius rₘₐₓ (9) of maximally 0.75 mm, preferably maximally 0.6 mm, and more preferably 0.17 to 0.2 mm.

5. Hard metal electroerosion electrode (1) according to one of claims 1 to 4, characterised in that the wall of the channel (2) essentially consists of a number of lands (5) which are separated from each other by recesses (3), the lands (5) and recesses extending in the longitudinal direction of the channel (2) essentially.

6. Hard metal electroerosion electrode (1) according to claim 5, characterised in that the lands (5) and recesses (3) are twisted at an angle of preferably at least 1° and more preferably in the range between 10° and 30°.

7. Hard metal electroerosion electrode (1) according to one of claims 5 or 6, characterised in that the angular proportion of the recesses (3), averaged from the minimum wall distance rₘᵢₙ to the maximum wall distance rₘₐₓ, is comprised between 20% and 80%, preferably between 50% and 75%, and more preferably between 66% and 75% of the full circle circumference.

8. Hard metal electroerosion electrode (1) according to one of claims 1 to 7, characterised in that the channel cross-section is three-, four-, or fivefold rotationally symmetrical.

9. Hard metal electroerosion electrode (1) according to one of claims 1 to 8, characterised in that the binder for the tungsten carbide is essentially nickel and/or cobalt.

10. Application of the hard metal electroerosion electrode (1) according to one of claims 1 to 8 for erosion methods operating in the longitudinal and the transversal directions of the hard metal electroerosion electrode, preferably while the electrode is rotated, more particularly for countersunk erosion especially of through and blind holes and for drilling starting holes for wire electroerosion.

## Revendications

1. Electrode (1) pour électroérosion en métal dur, essentiellement en forme d'une tige ayant un diamètre maximum de 6 mm, en direction longitudinale de laquelle s'étend au moins un canal (2) fermé, et composée essentiellement d'un métal dur consistant de carbure de tungstène et d'un liant, caractérisée en ce que le canal présente une section transversale où le quotient q de la différence Δr entre la plus grande distance rₘₐₓ (9) et la plus petite distance rₘᵢₙ (10) respective entre la paroi intérieure du canal et le centre de gravité de la section du canal (2), et de la plus grande distance rₘₐₓ (9) s'élève à au moins 0,01, et que chaque canal présente une symétrie de révolution de l'ordre d'un nombre entier, les canaux étant disposés en symétrie de révolution par rapport au centre de gravité de la section transversale de l'électrode au cas d'une pluralité de canaux.

2. Electrode (1) pour électroérosion en métal dur selon la revendication 1, caractérisée en ce que l'électrode pour électroérosion en métal dur correspond à au moins une des caractéristiques suivantes:
- diamètre extérieur minimum de 0,1 mm et maximum de 6 mm, diamètre maximum préféré de 4 mm;
- section transversale avec symétrie de révolution, préférablement circulaire de l'électrode;
- exactement un canal (2) dont le centre de gravité de la section transversale est essentiellement identique à celui de l'électrode (1) pour électroérosion en métal dur; et
- deux canaux (2) ou plus, préférablement disposés autour du centre de gravité de l'électrode pour électroérosion en métal dur en symétrie de révolution.

3. Electrode (1) pour électroérosion en métal dur selon la revendication 1 ou 2, caractérisée en ce que le quotient q est égal à 0,1 au minimum et préférablement compris entre 0,25 et 0,7, plus préférablement entre 0,4 et 0,6.

4. Electrode (1) pour électroérosion en métal dur selon l'une des revendications 1 à 3, caractérisée en ce qu'au moins un canal (2) présente un plus grand rayon rₘₐₓ (9) de 0,75 mm au plus, préférablement de 0,6 mm au plus, et plus préférablement de 0,17 mm à 0,2 mm.

5. Electrode (1) pour électroérosion en métal dur selon l'une des revendications 1 à 4, caractérisée en ce que la paroi du canal (2) est essentiellement composée d'un nombre de filets (5) séparés l'un de l'autre par des évidements (3), les filets (5) et les évidements s'étendant essentiellement en direction longitudinale du canal (2).

6. Electrode (1) pour électroérosion en métal dur selon la revendication 5, caractérisée en ce que les filets (5) et les évidements (3) présentent une orientation oblique préférablement définie par un angle minimum de 1°, plus préférablement entre 10° et 30°.

7. Electrode (1) pour électroérosion en métal dur selon l'une des revendications 5 ou 6, caractérisée en ce que la proportion angulaire des évidements (3), en moyenne entre la distance minimale de la paroi rₘᵢₙ et la distance maximale de la paroi rₘₐₓ, est comprise entre 20% et 80%, préférablement entre 50% et 75%, et plus préférablement entre 66% et 75% de la circonférence entière.

8. Electrode (1) pour électroérosion en métal dur selon l'une des revendications 1 à 7, caractérisée en ce que la section transversale du canal présente une symétrie de révolution du troisième, quatrième ou cinquième ordre.

9. Electrode (1) pour électroérosion en métal dur selon l'une des revendications 1 à 8, caractérisée en ce que le liant pour le carbure de tungstène est essentiellement du nickel et/ou du cobalt.

10. Application de l'électrode (1) pour électroérosion en métal dur selon l'une des revendications 1 à 8 pour des procédés d'érosion opérant en direction longitudinale et transversale de l'électrode pour électroérosion en métal dur, préférablement avec rotation de l'électrode, plus particulièrement pour l'érosion d'évidements, particulièrement de trous de passage ou borgnes et pour le perçage de trous de départ pour l'électroérosion par fil.
